# EUROPÄISCHE PATENTSCHRIFT

(11) **EP 3 152 809 B1**
(45) Veröffentlichungstag und Bekanntmachung des Hinweises auf die Patenterteilung: **26.12.2018**
(21) Anmeldenummer: 15726950.7
(22) Anmeldetag: 01.06.2015
(51) Int. Cl.: H02G 3/08, H01R 13/424, H01R 13/506

(54) **ELEKTRISCHES GERÄT**
ELETRICAL EQUIPMENT
APPAREIL ÉLECTRIQUE

(30) Priorität: 04.06.2014 DE 102014008343
(43) Veröffentlichungstag der Anmeldung: 12.04.2017
(73) Patentinhaber: Kostal Kontakt Systeme GmbH, 58513 Lüdenscheid (DE)
(72) Erfinder: METZLER, Markus, 58638 Iserlohn (DE); SCHRICKER, Michael, 58511 Lüdenscheid (DE)
(74) Vertreter: Kerkmann, Detlef
(86) Internationale Anmeldenummer: PCT/EP2015/062164
(87) Internationale Veröffentlichungsnummer: WO 2015/185511

(56) Entgegenhaltungen:
- EP-A1- 2 581 175
- EP-A2- 2 051 337
- AT-B- 395 084
- DE-A1-102008 052 822
- DE-A1-102010 007 093
- DE-B4-102008 022 055
- DE-C1- 10 135 971

## Beschreibung

Die Erfindung betrifft ein elektrisches Gerät mit einem Gehäuse, welches mindestens einen angeformten Kabeleinlassstutzen aufweist, durch den ein Kabel in das Innere des Gehäuses geführt ist, und mit einer an mindestens einem Kabeleinlassstutzen angeordneten Klemmvorrichtung, die am Kabel fixiert und an dem Gehäuse befestigt ist, wobei die Klemmvorrichtung an der Eingangsöffnung des mindestens einen Kabeleinlassstutzens angeordnet ist.

Elektrische Geräte weisen, soweit sie keine eingebaute Stromversorgung besitzen, im Allgemeinen mindestens eine elektrische Anschlussleitung auf. Diese Anschlussleitung kann entweder über eine elektrische Steckverbindung am Gehäuse des Geräts angeschlossen oder aber über eine Gehäuseöffnung in das Innere des Geräts geführt sein, um dort interne Gerätekomponenten zu kontaktieren. Besonders im zweiten Fall ist es erforderlich, das Kabel am Gehäuse zu befestigen, damit die elektrische Anbindung nicht bereits durch geringe auf das Kabel einwirkende Zugkräfte zerstört wird. Die hierzu verwendeten Mittel und Anordnungen werden zumeist als Zugentlastungsvorrichtungen bezeichnet. Es sei angemerkt, dass der Begriff "elektrisches Gerät" hier in einem weiten Sinne verstanden werden soll, der insbesondere auch Anschlussdosen und Steckverbinder umfasst.

Das Funktionsprinzip der Zugentlastung einer Anschlussleitung beruht zumeist darauf, die Anschlussleitung durch das Zusammenfügen von Gehäuseteilen oder durch das Anziehen einer Verschraubung am Gehäuse klemmend zu fixieren.

In vielen Fällen besteht das Gehäuse eines elektrischen Geräts aus zwei zusammenfügbaren Gehäuseteilen, die nach dem Zusammenfügen die Anschlussleitung an einer dazu vorgesehenen Stelle zwischen sich einklemmen. Diese Art der Zugentlastung funktioniert allerdings weniger gut, wenn relativ querschnittsstarke und starre Anschlusskabel an einem Gehäuse zu befestigen sind. Insbesondere dann, wenn an einem Gehäuse mehrere Kabel anzubringen sind, ist es zweckmäßig, hierzu besonders geeignete Befestigungsmittel vorzusehen.

Aus der europäischen Patentanmeldung EP 2 581 175 A1 ist ein elektrisches Gerät bekannt, welches eine Zugentlastungsvorrichtung für ein Anschlusskabel aufweist. Die Zugentlastungsvorrichtung wirkt als Klemmvorrichtung auf das Anschlusskabel und besteht aus zwei Klemmkörpern, die durch Rastelemente miteinander verbunden sind. Jeder dieser beiden Klemmkörper weist mehrere angeformte Klemmrippen auf.

In der deutschen Offenlegungsschrift DE 10 2010 007 093 A1 ist ein gattungsgemäßes elektrisches Gerät mit einer Kabeldurchführung durch eine Gehäusewand beschrieben. Dargestellt ist eine Anschlussdose, insbesondere für eine Photovoltaikanlage, an deren Gehäuse zwei Kabeleinlassstutzen angeformt sind. Durch die Kabeleinlassstutzen kann jeweils ein relativ starres, geschirmtes Hochvoltkabel in das Innere des Gehäuses geführt werden. Zur Befestigung eines Kabels ist an dessen Außenmantel eine Hülse angecrimpt. Eine Ringfläche an der Hülse wird an die Stirnfläche eines Kabeleinlassstutzens angelegt und durch eine auf den Kabeleinlassstutzen aufschraubbare Überwurfmutter befestigt.

Die Herstellung einer derartigen Kabelbefestigung ist montagetechnisch relativ aufwendig, und zwar erstens wegen des auszuführenden Crimpvorgangs und zweitens wegen des zur Herstellung der Verschraubung erforderlichen vergleichsweise großen Zeitaufwands. Daher eignet sich eine solche Ausführung nur bedingt für Geräte, die in größeren Stückzahlen gefertigt werden und an denen jeweils mehrere Kabel zu befestigen sind.

Es stellte sich die Aufgabe, ein elektrisches Gerät zu schaffen, an dem ein oder mehrere Kabel besonders einfach, schnell, sicher und kostengünstig an Kabeleinlassstutzen fixierbar sind.

Diese Aufgabe wird erfindungsgemäß durch ein elektrisches Gerät gemäß Anspruch 1 gelöst.

Die erfindungsgemäße Ausgestaltung des elektrischen Geräts ermöglicht, es ein oder mehrere Kabel, die auch relativ starr und querschnittsstark ausgebildet sein können, schnell und mit einem geringen Aufwand zugentlastet und vibrationsgeschützt an einem Gehäuse zu befestigen. Vorteilhafte Ausgestaltungen und Weiterbildungen des erfindungsgemäßen elektrischen Geräts sind in den abhängigen Ansprüchen beschrieben. Zwei Ausführungsbeispiele der Erfindung sind in der Zeichnung dargestellt und werden im Folgenden anhand der Zeichnung näher erläutert. Es zeigen die
- Figuren 1 und 2: ein erstes erfindungsgemäß aufgebautes elektrisches Gerät,
- Figuren 3 und 4: ein zweites erfindungsgemäß aufgebautes elektrisches Gerät,
- Figuren 5 bis 7: Einzelteile des ersten elektrischen Geräts,
- Figuren 8 und 9: Einzelteile des zweiten elektrischen Geräts,
- Figur 10: eine Schnittansicht des ersten Geräts,
- Figur 11: eine Schnittansicht des zweiten Geräts.

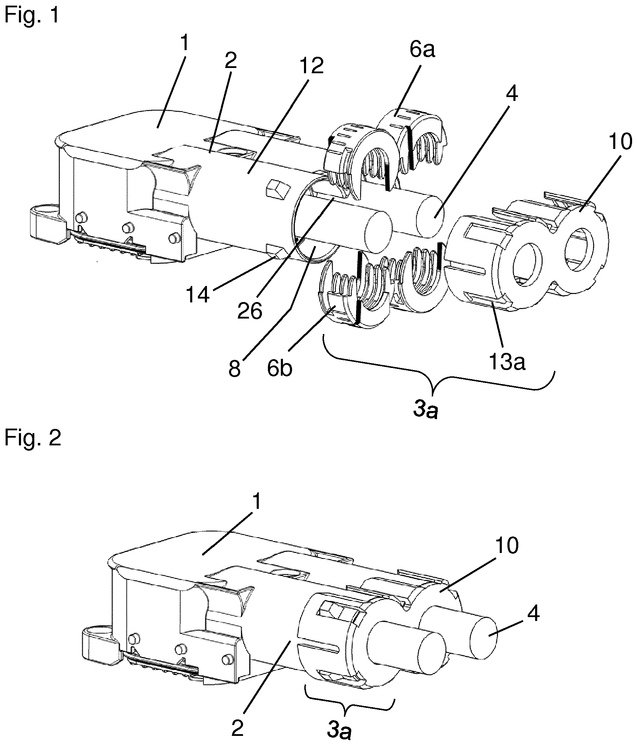

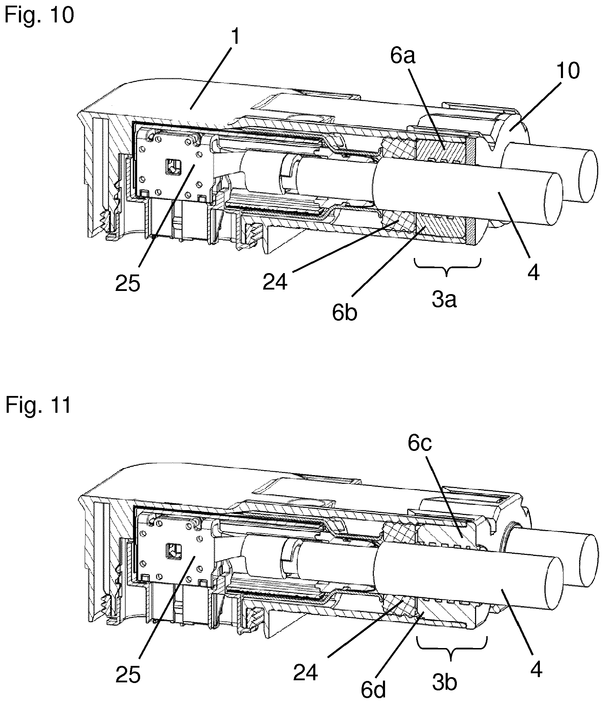

In der Figur 1 ist ein erstes Ausführungsbeispiel eines erfindungsgemäß aufgebauten elektrischen Geräts in einer Explosionsansicht dargestellt. Die Figur 2 zeigt das gleiche Gerät im montierten Zustand. Wie aus der Schnittansicht der Figur 10 ersichtlich ist, bildet das Gerät beispielhaft ein Steckverbinderteil für elektrische Hochvoltverbindungen aus. Ein entsprechend aufgebautes elektrisches Gerät kann aber natürlich auch für eine andere Funktion vorgesehen sein und insbesondere diverse elektrische und/oder elektronische Komponenten beinhalten.

Wesentlich ist, dass das Gehäuse 1 des Geräts mindestens einen angeformten Kabeleinlassstutzen 2 aufweist, durch den ein Kabel 4 in das Gehäuseinnere geführt ist. Vorzugsweise weist das Gehäuse 1 mehrere parallel zueinander angeordnete Kabeleinlassstutzen 2 auf. In den beiden in der Zeichnung dargestellten Ausführungsbeispielen sind die Gehäuse 1 mit jeweils zwei zueinander parallel angeordneten Kabeleinlassstutzen 2 dargestellt, wobei diese Anzahl als beispielhaft und nicht als Beschränkung der Ausführungsmöglichkeiten der Erfindung verstanden werden soll. Die beiden Kabeleinlassstutzen 2 weisen jeweils einen kreisrunden Querschnitt auf, wobei aber ohne Weiteres auch eine andere, beispielweise ovale oder mehreckige Querschnittsform vorgesehen sein könnte.

Die Figur 1 zeigt an jedem Kabeleinlassstutzen 2 ein in das Gehäuse 1 geführtes Kabel 4. Zur Erzielung einer sicheren Funktion des Geräts sind diese Kabel 4 vibrationsfest und gegen angreifende Zugkräfte geschützt an den Kabeleinlassstutzen 2 befestigt. Dieses wird hier durch eine dreiteilig ausgebildete Klemmvorrichtung 3a erreicht, die aus zwei miteinander verbindbaren Klemmkörpern 6a, 6b in Form von Kabelklauen, sowie aus einer Haltekappe 10 besteht.

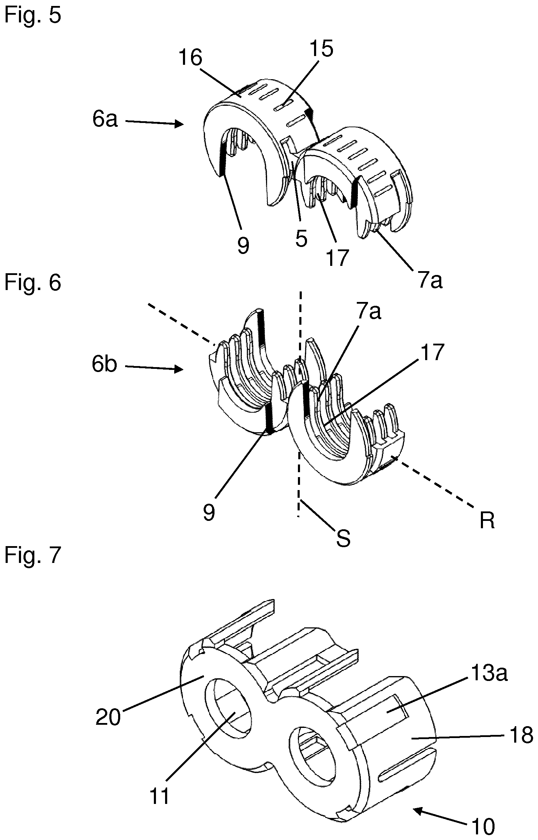

Die Klemmkörper 6a, 6b und die Haltekappe 10 sind in den Figuren 5 bis 7 jeweils als Einzelteile dargestellt. Ein erster Klemmkörper 6a besteht im Wesentlichen aus zwei einstückig geformten, im Querschnitt halbringförmigen Abschnitten 16, die über einen Verbindungssteg 5 miteinander verbunden sind. Auf der Oberseite der Abschnitte 16 sind mehrere zueinander parallele Anlagerippen 15 angeformt, die nach Abschluss der Montage einen spielfreien Sitz der Klemmvorrichtung 3a in den Kabeleinlassstutzen 2 unterstützen.

Die beiden halbringförmigen Abschnitte 16 des ersten Klemmkörpers 6a können durch das Anfügen eines zweiten Klemmkörpers 6b zu zwei geschlossenen Ringabschnitten ergänzt werden. An jedem der Klemmkörper 6a, 6b sind jeweils mehrere Klemmrippen 7a parallel zueinander und durch Zwischenräume 17 voneinander getrennt angeordnet. Beim Zusammenfügen der Klemmkörper 6a, 6b fügen sich die bogenförmige Klemmrippen 7a des einen Klemmkörpers 6a bzw. 6b in die Zwischenräume 17 am jeweils anderen Klemmkörpers 6b bzw. 6a ein und bilden so eine verschränkte Anordnung von Klemmrippen 7a.

Besonders vorteilhaft ist, dass die beiden derart zusammenfügbaren Klemmkörper 6a, 6b identisch ausgebildet sein können. Dreht man den in der Figur 6 dargestellten Klemmkörper 6b um 180° um die gestrichelt eingezeichnete Rotationsachse R, so erhält man den Klemmkörper 6a gemäß der Figur 5. Die Figuren 5 und 6 zeigen somit den gleichen Gegenstand aus unterschiedlichen Perspektiven. Da somit zur Herstellung der Klemmvorrichtung 3a keine unterschiedlich ausgebildeten Klemmkörper benötigt werden, können die Klemmkörper 6a, 6b als kostengünstige Gleichteile in hoher Stückzahl gefertigt werden.

Vorteilhafterweise können die Klemmkörper 6a, 6b zudem achsensymmetrisch zu einer in der Figur 6 eingezeichnet Symmetrieachse S ausgebildet sein. Eine Rotation des Klemmkörpers 6a oder 6b um diese Symmetrieachse S um 180° führt wieder zu selben Erscheinungsbild. Diese Symmetrie vereinfacht die Montage, da auf die diesbezügliche Ausrichtung beim Zusammenfügen der beiden Klemmkörper 6a, 6b nicht geachtet zu werden braucht.

Beim Zusammenfügen verbinden sich die beiden Klemmkörper 6a, 6b, durch angeformte Verbindungsmittel 9 miteinander, die etwa Mikroverzahnungen an zusammentreffenden Teilen der Klemmkörper 6a, 6b ausbilden, welche in den Figuren 5 und 6 vereinfacht durch schwarz markierte Flächen dargestellt sind.

Die Mikroverzahnungen ausbildenden Verbindungsmittel 9 ermöglichen eine Verbindung der Klemmkörper 6a, 6b in einer nahezu kontinuierlichen Abfolge von Raststufen, und damit ein enges Andrücken der Klemmkörper 6a, 6b an die beiden Kabel 4, wobei sich die Klemmrippen 7a in das Mantelmaterial der Kabel 4 eindrücken. Die dadurch fest mit den Kabeln 4 verbundenen Klemmkörper 6a, 6b werden dann zusammen mit den angebundenen Kabeln 4 in die Eingangsöffnungen 8 der Kabeleinlassstutzen 2 eingesetzt, bis die äußeren Stirnflächen der miteinander verbundenen Klemmkörper 6a, 6b bündig mit den Stirnkanten der Kabeleinlassstutzen 2 abschließen. Die Verbindungsstege 5 zwischen den Abschnitten 16 der Klemmkörper 6a, 6b werden dabei von einer Ausnehmung 26, die in der Figur 1 erkennbar ist, zwischen den Kabeleinlassstutzen 2 aufgenommen.

Zur Fixierung der soweit montierten Anordnung dient eine Haltekappe 10, die als Einzelteil in der Figur 7 abgebildet ist. Die einstückig geformte Haltekappe 10 hat im Wesentlichen die Form von zwei entlang ihrer Seitenwände 18 miteinander verbundener zylinderförmigen Kappen. Die Stirnwand 20 der Haltekappe 10 weist zwei Kabeldurchgangsöffnungen 11 auf, deren Durchmesser den Querschnittsweiten der durchzuführenden Kabel 4 entsprechen. In die Seitenwände 18 der Haltekappe 10 sind mehrere schlitzförmige Rastausnehmungen 13a eingebracht.

Zur Montage werden die freien Endabschnitte der Kabel 4 durch die Kabeldurchgangsöffnungen 11 geführt und die Haltekappe 10 über die Kabel 4 gezogen, bis sie kurz vor dem Gehäuse 1 liegt. Nach der Montage der Klemmkörper 6a, 6b an die Kabel 4 und dem Einschieben der Klemmkörper 6a, 6b in die Kabeleinlassstutzen 2 werden die Seitenwände 18 der Haltekappe 10 über die Außenseite der Kabeleinlassstutzen 2 geschoben, bis an den Kabeleinlassstutzen 2 angeformte Rastnasen 14 in die Rastausnehmungen 13a der Haltekappe 10 einrasten. Damit ist der in der Figur 2 dargestellte Montagezustand hergestellt. Die Stirnwand 20 der Haltekappe 10 fixiert nun die Klemmkörper 6a, 6b in den Kabeleinlassstutzen 2. Die Haltekappe 10 bildet damit zusammen mit den beiden Klemmkörpern 6a, 6b die Klemmvorrichtung 3a aus, welche hier zwei Kabel 4 an dem Gehäuse 1 gegen Zug- und Vibrationsbelastungen schützend befestigt.

Allerdings sind beim Zusammenbau des anhand der Figuren 1 und 2 beschriebenen Geräts erstens das Durchführen der Kabel 4 durch die Kabeldurchgangsöffnungen 11 der Haltekappe 10 und zweitens das Verschieben der Haltekappe 10 über die Länge der Kabel 4 relativ aufwendige Montageschritte.

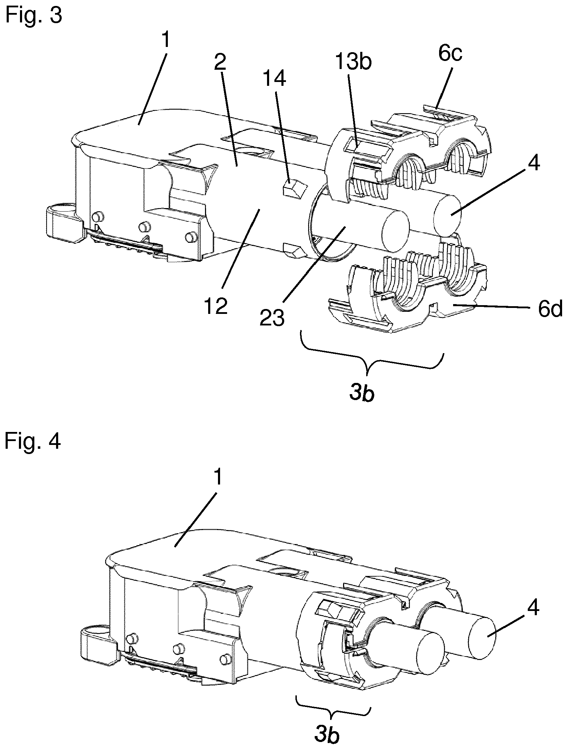

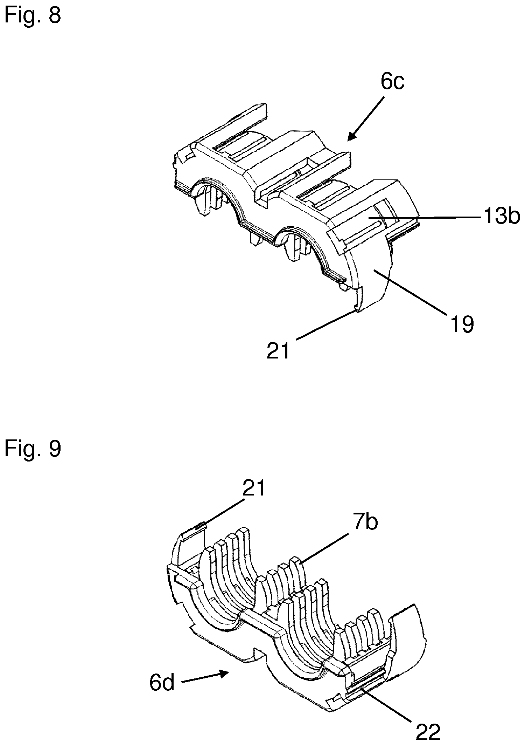

Eine besonders vorteilhafte Ausführung eines elektrischen Geräts bei dem diese Montageschritte vereinfacht sind beziehungsweise ganz fortfallen, ist in den Figuren 3 und 4 dargestellt. Wie besonders deutlich aus den Figuren 8 und 9 hervorgeht, sind die Klemmkörper 6c und 6d hier derart ausgeführt, dass sie zugleich die Funktion einer Haltekappe übernehmen können.

Die Form der Klemmkörper 6c, 6d ergibt sich dem Prinzip nach dadurch, dass die zuvor beschriebene Haltekappe 10 längsgeteilt wird, und jede der Längshälften der Haltekappe 10 mit einem der zuvor erläuterten Klemmkörper 6a, 6b verbunden wird.

Die derart modifiziert ausgebildeten Klemmkörper 6c, 6d können ebenfalls einstückig hergestellt werden. Darüber hinaus können die zu verbindenden Klemmkörper 6c, 6d ebenfalls derart symmetrisch geformt sein, dass sie als kostengünstige Gleichteile herstellbar sind.

Auf Rastelemente im Bereich der Klemmrippen 7b, die etwa eine Mikroverzahnung ausbilden, kann bei dieser Ausführung der Klemmkörper 6c, 6d verzichtet werden. Stattdessen sind stabile Rastelemente 21, 22 an äußeren Gehäuseteilen 19 der Klemmkörper 6c, 6d angeformt.

Die Figur 3 zeigt eine Explosionsansicht einer zweiten Ausführung des erfindungsgemäßen Geräts. Unter der Annahme, dass die Kabel 4 noch nicht bis in ihre Endposition in die Kabeleinlassstutzen 2 eingeschoben sind, kann diese Darstellung zugleich auch den Montageschritt des Anfügens der Klemmvorrichtung 3b an die Kabel 4 und die Kabeleinlassstutzen 2 verdeutlichen. Im Gegensatz zum ersten Ausführungsbeispiel ist die Klemmvorrichtung 3b nicht dreiteilig sondern zweiteilig ausgebildet und besteht nur aus den beiden Klemmkörpern 6c, 6d.

Zur Befestigung werden die beiden Klemmkörper 6c, 6d beiderseits der Kabel 4 positioniert und dann gegeneinander gepresst. Dabei verrasten die Rastelemente 21, 22 an den äußeren Gehäuseteilen 19 der Klemmkörper 6c, 6d miteinander und pressen die Klemmrippen 7b gegen die Kabelmäntel 23. Hierdurch ist die Klemmvorrichtung 3b an den Kabeln 4 fixiert. Durch Einschieben der Klemmkörper 6c, 6d in die Kabeleinlassstutzen 2 werden zugleich die äußeren Gehäuseteile 19 der Klemmvorrichtung 3b über die Außenflächen 12 der Kabeleinlassstutzen 2 geschoben, bis sich Rastausnehmungen 13b in den äußeren Gehäuseteilen 19 mit Rastnasen 14 an den Kabeleinlassstutzen 2 verbinden. Damit ist der in der Figur 4 dargestellte Montagezustand mit am Gehäuse 1 fixierten Kabeln 4 erreicht.

Die Figuren 10 und 11 verdeutlichen den Aufbau der ersten und der zweiten Ausführungsform des elektrischen Geräts zusätzlich in jeweils einer Längsschnittansicht.

Die Figur 10 zeigt deutlich die dreiteilige Ausbildung der Klemmvorrichtung 3a durch die beiden Klemmkörper 6a, 6b und die Haltekappe 10, während die Ausführung gemäß der Figur 11 zeigt, wie die aus nur den beiden Klemmkörpern 6c, 6d bestehende Klemmvorrichtung 3b sowohl die Kabel 4 fixiert, als auch eine formschlüssige Verbindung zum Gehäuse 1 herstellt.

Unmittelbar hinter jeder Klemmvorrichtung 3a, 3b ist jeweils eine Gummidichtung 24 erkennbar, welche das Eindringen von Feuchtigkeit von der Kabelseite her in das Gehäuse 1 verhindert.

In den Figuren 10 und 11 ersichtlich ist zudem jeweils eine Steckbuchse 25 eines elektrischen Hochvoltsteckverbinders, in die von der Unterseite des Gehäuses 1 her ein Flachsteckverbinder eingesetzt werden kann. Weitere Einzelheiten zur Ausgestaltung eines derartigen Hochvoltsteckverbinders können der deutschen Offenlegungsschrift DE 10 2009 016 157 A1 entnommen werden, so dass auf eine nähere Erläuterung an dieser Stelle verzichtet werden kann.

### Bezugszeichenliste

- 1: Gehäuse
- 2: Kabeleinlassstutzen
- 3a, 3b: Klemmvorrichtung
- 4: Kabel
- 5: Verbindungssteg
- 6a, 6b, 6c, 6d: Klemmkörper
- 7a, 7b: Klemmrippen
- 8: Eingangsöffnung
- 9: Verbindungsmittel
- 10: Haltekappe
- 11: Kabeldurchgangsöffnungen
- 12: Außenflächen
- 13a, 13b: Rastausnehmungen (erste Rastmittel)
- 14: Rastnasen (zweite Rastmittel)
- 15: Anlagerippen
- 16: (halbringförmige) Abschnitte
- 17: Zwischenräume
- 18: Seitenwände
- 19: äußere Gehäuseteile
- 20: Stirnwand
- 21,22: Rastelemente
- 23: Kabelmäntel
- 24: Gummidichtung
- 25: Steckbuchse
- 26: Ausnehmung

- R: Rotationsachse
- S: Symmetrieachse

## Patentansprüche

1. Elektrisches Gerät
mit einem Gehäuse (1), welches mindestens einen angeformten Kabeleinlassstutzen (2) aufweist, durch den ein Kabel (4) in das Innere des Gehäuses (1) geführt ist,
und mit einer an mindestens einem Kabeleinlassstutzen (2) angeordneten Klemmvorrichtung (3a, 3b), die am Kabel (4) fixiert und an dem Gehäuse (1) befestigt ist,
wobei die Klemmvorrichtung (3a, 3b) an der Eingangsöffnung (8) des mindestens einen Kabeleinlassstutzens (2) angeordnet ist und wobei die Klemmvorrichtung (3a, 3b) durch Rastmittel (13a, 13b, 14) an dem mindestens einen Kabeleinlassstutzen (2) befestigt ist, und wobei die Klemmvorrichtung (3a, 3b) eine Haltekappe (10) aufweist oder ausbildet,
**dadurch gekennzeichnet,**
**dass** die Klemmvorrichtung (3a, 3b) zwei miteinander verbundene Klemmkörper (6a, 6b; 6c, 6d) aufweist, wobei jeder Klemmkörper (6a, 6b, 6c, 6d) mehrere angeformte Klemmrippen (7a, 7b) aufweist, und wobei die Klemmrippen (7a, 7b) von miteinander verbundenen Klemmkörpern (6a, 6b; 6c, 6d) miteinander verschränkt sind, und
**dass** an der Haltekappe (10) erste schlitzförmige Rastmittel (13a, 13b) angeformt sind, die mit zweiten als Nasen (14) ausgebildeten Rastmitteln durch Aufschieben verrastbar sind, die an der Außenfläche (12) des mindestens einen Kabeleinlassstutzens (2) angeordnet sind, und dass die mit dem mindestens einen Kabeleinlassstutzens (2) verrastete Haltekappe (10) die beiden Klemmkörper (6a, 6b) im Inneren des mindestens einen Kabeleinlassstutzens (2) einschließt.

2. Elektrisches Gerät nach Anspruch 1, **dadurch gekennzeichnet, dass** die Klemmvorrichtung (3b) aus zwei Klemmkörpern (6c, 6d) besteht, und dass an die Klemmkörper (6c, 6d) erste Rastmittel (13b) angeformt sind, die mit zweiten Rastmitteln (14) verbindbar sind, welche an der Außenfläche (12) des mindestens einen Kabeleinlassstutzens (2) angeordnet sind.

3. Elektrisches Gerät nach Anspruch 1, **dadurch gekennzeichnet, dass** die Haltekappe (10) an jedem Kabeleinlassstutzen (2) eine Kabeldurchgangsöffnung (11) aufweist.

4. Elektrisches Gerät nach Anspruch 1, **dadurch gekennzeichnet, dass** die zusammenfügbaren Klemmkörper (6a, 6b bzw. 6c, 6d) als Gleichteile ausgebildet sind.

5. Elektrisches Gerät nach Anspruch 1, **dadurch gekennzeichnet, dass** jeder Klemmkörper (6a, 6b, 6c, 6d) achsensymmetrisch ausgebildet ist.

6. Elektrisches Gerät nach Anspruch 1, **dadurch gekennzeichnet, dass** die Kabel (4) elektrische Hochvoltkabel sind.

7. Elektrisches Gerät nach Anspruch 1 oder 6, **dadurch gekennzeichnet, dass** das Gerät einen elektrischer Verbinder ausbildet.

## Claims

1. Electrical device
having a housing (1) showing at least one integrally moulded cable inlet gland (2) through which a cable (4) is run to inside the housing (1),
and having a clamping facility (3a, 3b) which is located at not less than one cable inlet gland (2) and is fastened to the cable (4) and to the housing (1),
whereby the clamping facility (3a, 3b) is located at the input aperture (8) of the at least one cable inlet gland (2) and whereby the clamping facility (3a, 3b) is attached to the at least one cable inlet gland (2) by way of latching means (13a, 13b, 14),
and whereby the clamping facility (3a, 3b) has or forms a retaining cap (10), **characterised in that:**
the clamping facility (3a, 3b) has two terminal elements (6a, 6b; 6c, 6d) which are connected to each other, whereby each terminal element (6a, 6b; 6c, 6d) has a plurality of integrally moulded clamping fins (7a, 7b), and whereby the clamping fins (7a, 7b) of interconnected terminal elements (6a, 6b; 6c, 6d) are intertwined, and
that first slot-shaped latching means (13a, 13b) are moulded onto the retaining cap (10) which, by being pushed on, can interlock with second latching means shaped as lugs (14) which are located on the outer surface (12) of the at least one cable entry gland (2), and that the retaining cap (10) which is latched with the at least one cable entry gland (2) encloses the two terminal elements (6a, 6b) inside the at least one cable entry gland (2).

2. Electrical device according to Claim 1, **characterised in that** the clamping facility (3b) is composed of two terminal elements (6c, 6d) and that first latching means (13b) are integrally moulded onto the terminal elements (6c, 6d) which can be connected to second latching means (14) that are located on the outer surface (12) of the at least one cable entry gland (2).

3. Electrical device according to Claim 1, **characterised in that** the retaining cap (10) has a cable passage opening (11) at each cable entry gland (2).

4. Electrical device according to Claim 1, **characterised in that** the connectable terminal elements (6a, 6b or 6c, 6d) are designed as identical components.

5. Electrical device according to Claim 1, **characterised in that** each terminal element (6a, 6b, 6c, 6d) is of an axisymmetric design.

6. Electrical device according to Claim 1, **characterised in that** the cables (4) are electrical high-voltage cables.

7. Electrical device according to Claim 1 or Claim 6, **characterised in that** the device constitutes an electrical connector.

## Revendications

1. Appareil électrique avec un boîtier (1), qui comprend au moins une tubulure d'entrée de câble (2), à travers laquelle un câble (4) est conduit à l'intérieur du boîtier (1),
et avec un dispositif de serrage (3a, 3b), qui, disposé sur au moins une tubulure d'entrée de câble (2), est fixé au câble (4) et rattaché au boîtier (1),
sachant que le dispositif de serrage (3a, 3b) est disposé sur l'ouverture d'entrée (8) de l'au moins une tubulure d'entrée de câble (2), et sachant que le dispositif de serrage (3a, 3b) est fixé à l'au moins une tubulure d'entrée de câble (2) par des moyens d'arrêt (13a, 13b, 14), et sachant que le dispositif de serrage (3a, 3b) présente ou forme un capuchon de retenue (10),
**caractérisé en ce que**
le dispositif de serrage (3a, 3b) présente deux corps de serrage (6a, 6b; 6c, 6d), sachant que chaque corps de serrage (6a, 6b; 6c, 6d) présente plusieurs nervures de serrage (7a, 7b), et sachant que les nervures de serrage (7a, 7b) des corps de serrage (6a, 6b; 6c, 6d) reliés ensemble s'entrecroisent, et
que, sur le capuchon de retenue (10), sont formés des premiers moyens d'arrêt (13a, 13b) en forme de fentes, lesquels peuvent s'enclencher, par poussée, avec des deuxièmes moyens d'arrêt (14) en forme de nez, qui sont disposés sur la face extérieure (12) de l'au moins une tubulure d'entrée de câble (2), et que le capuchon de retenue (10), bloqué avec l'au moins une tubulure d'entrée de câble (2), enferme les deux corps de serrage (6a, 6b) à l'intérieur de l'au moins une tubulure d'entrée de câble (2).

2. Appareil électrique selon la revendication 1, **caractérisé en ce que** le dispositif de serrage (3b) consiste en deux corps de serrage (6c, 6d), et que, sur les corps de serrage (6c, 6d), sont formés des premiers moyens d'arrêt (13b), qui peuvent être reliés aux deuxièmes moyens d'arrêt (14), qui sont disposés sur la face extérieure (12) de l'au moins une tubulure d'entrée de câble (2)

3. Appareil électrique selon la revendication 1, **caractérisé en ce que** le capuchon de retenue (10) présente, sur chaque tubulure d'entrée de câble (2), une ouverture de passage de câble (11).

4. Appareil électrique selon la revendication 1, **caractérisé en ce que** les corps de serrage (6a, 6b respectivement 6c, 6d) assemblables sont réalisés en tant que pièces semblables.

5. Appareil électrique selon la revendication 1, **caractérisé en ce que** chaque corps de serrage (6a, 6b; 6c, 6d) est de conception à axes symétriques.

6. Appareil électrique selon la revendication 1, **caractérisé en ce que** le câble (4) est un câble électrique haut voltage.

7. Appareil électrique selon revendication 1 ou 6, **caractérisé en ce que** l'appareil est un connecteur électrique.
